(19)

Europäisches Patentamt

European Patent Office

Office européen des brevets

(11) **EP 3 498 741 A1**

(12) **EUROPEAN PATENT APPLICATION**
published in accordance with Art. 153(4) EPC

(43) Date of publication:
**19.06.2019 Bulletin 2019/25**

(21) Application number: **17839114.0**

(22) Date of filing: **05.07.2017**

(51) Int Cl.:
*C08F 214/08* (2006.01)      *B65D 65/02* (2006.01)
*C08J 5/18* (2006.01)      *C08F 214/06* (2006.01)

(86) International application number:
**PCT/JP2017/024707**

(87) International publication number:
**WO 2018/030040 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.08.2016 JP 2016155463**

(71) Applicant: **Kureha Corporation
Chuo-ku
Tokyo 103-8552 (JP)**

(72) Inventors:
• **ENOMOTO, Sei**
  **Tokyo 103-8552 (JP)**
• **MASUDA, Kenichi**
  **Tokyo 103-8552 (JP)**
• **HOSODA, Tomonori**
  **Tokyo 103-8552 (JP)**

(74) Representative: **Hoefer & Partner Patentanwälte mbB
Pilgersheimer Straße 20
81543 München (DE)**

(54) **VINYLIDENE CHLORIDE-BASED RESIN FILM, WRAP FILM USING SAME, AND METHOD FOR PRODUCING SAID RESIN FILM**

(57) The present invention provides a vinylidene chloride-based resin film exhibiting excellent adhesion, a wrap film using the same, and a production method for the resin film.

The vinylidene chloride-based resin film according to the present invention contains a vinylidene chloride-vinyl chloride copolymer, wherein a molar ratio of diad sites in which one constituent unit derived from vinylidene chloride and one constituent unit derived from vinyl chloride are linked is not less than 25.3 mol% and not greater than 26.5 mol% relative to all constituent units in the copolymer. Preferably, the molar ratio of diads in which two constituent units derived from vinyl chloride are linked is not less than 2.5 mol% and not greater than 3.5 mol% relative to all constituent units in the copolymer.

FIG. 1

EP 3 498 741 A1

**Description**

TECHNICAL FIELD

The present invention relates to a vinylidene chloride-based resin film, a wrap film using the same, and a production method for the resin film.

BACKGROUND ART

To enhance the airtightness within a package, wrap films used in the packaging of food products, industrial materials, and the like are themselves required to have excellent adhesion. There are known wrap films that have been designed to enhance adhesion. Examples of such wrap films include the films described in Patent Documents 1 to 3. Patent Document 1 describes an adhesive film made of a resin composition including a thermoplastic resin, an adhesive agent, and an adhesion imparting agent, wherein at least the adhesion imparting agent is in liquid form at normal temperatures, and the resin composition contains 100 parts by weight of the thermoplastic resin and from 0.01 to 3 parts by weight of each of the adhesive agent and the adhesion imparting agent. Patent Document 2 describes a vinylidene chloride-based resin wrap film containing an epoxidized vegetable oil, (1) one or more types of glycerin fatty acid esters, and (2) an aliphatic dibasic acid ester, wherein the total content of (1) and (2) is not less than 3 wt.%, and the content of (2) is from 0.05 to 0.5 wt.%. Patent Document 3 describes a vinylidene chloride-based resin wrap film containing from 0.2 to 10 wt.% of one or more types of propylene glycol fatty acid esters.

CITATION LIST

Patent Literature

    Patent Document 1: JP 10-324809 A
    Patent Document 2: JP 11-199736 A
    Patent Document 3: JP 11-12422 A

SUMMARY OF INVENTION

Technical Problem

Conventional wrap films aim to achieve an effect of enhancing adhesion using additives, but this effect is not necessarily sufficient, and there is a demand for further improvement.
The present invention has been conceived in light of this problem, and an object thereof is to provide a vinylidene chloride-based resin film exhibiting excellent adhesion, a wrap film using the same, and a production method for the resin film.

Solution to Problem

The present inventors discovered that a wrap film with adhesive strength that is dramatically enhanced relative to conventional wrap films can be obtained by forming a vinylidene chloride-based resin film with a specific molecular composition, and the present inventors thereby completed the present invention.
A first aspect of the present invention is a vinylidene chloride-based resin film containing a vinylidene chloride-vinyl chloride copolymer, wherein a molar ratio of diad sites in which one constituent unit derived from vinylidene chloride and one constituent unit derived from vinyl chloride are linked is not less than 25.3 mol% and not greater than 26.5 mol% relative to all constituent units in the copolymer.
A second aspect of the present invention is a wrap film made of the resin film described above.
A third aspect of the present invention is a production method for a vinylidene chloride-based resin film, the method including: a polymerization step of obtaining a vinylidene chloride-vinyl chloride copolymer by polymerizing vinylidene chloride and vinyl chloride; and a molding step of molding the copolymer, wherein in the polymerizing step, polymerization is initiated at a polymerization initial temperature of not lower than 40°C and not higher than 46°C; polymerization is performed while heating under heating conditions expressed by the following formula (1):

$$T=at^2+bt \quad (1)$$

(wherein t represents time (units: hours), T represents a difference between a polymerization temperature and the polymerization initial temperature (units: °C), a represents a number not smaller than 0.0150 and not greater than 0.0300, and b represents a number not smaller than 0.1200 and not greater than 0.2500); and polymerization is then performed at a polymerization late-stage temperature of not lower than 57°C and not higher than 65°C.

Advantageous Effects of Invention

With the present invention, it is possible to provide a vinylidene chloride-based resin film exhibiting excellent adhesion, a wrap film using the same, and a production method for the resin film.

Brief Description of the Drawings

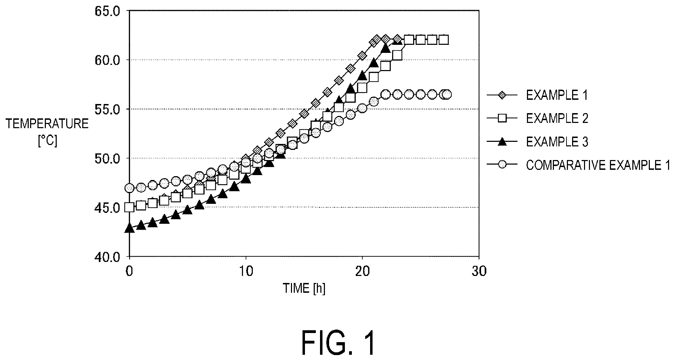

FIG. 1 is a graph illustrating changes in polymerization temperature over time in examples and a comparative example.

Description of Embodiments

Vinylidene chloride-based resin film

The vinylidene chloride-based resin film according to the present invention contains a vinylidene chloride-vinyl chloride copolymer, wherein a molar ratio of diad sites in which one constituent unit derived from vinylidene chloride and one constituent unit derived from vinyl chloride are linked is not less than 25.3 mol% and not greater than 26.5 mol% relative to all constituent units in the copolymer. The resin film described above exhibits excellent adhesion as a result of having the configuration described above.

Vinylidene chloride-vinyl chloride copolymer

The vinylidene chloride-vinyl chloride copolymer (simply called a "copolymer" hereinafter) forming the vinylidene chloride-based resin film contains constituent units derived from vinylidene chloride and constituent units derived from vinyl chloride. The copolymer is produced by performing suspension polymerization or emulsion polymerization on from 60 to 98 mass% of vinylidene chloride and from 2 to 40 mass% of vinyl chloride, preferably from 70 to 95 mass% of vinylidene chloride and from 5 to 30 mass% of vinyl chloride, and more preferably from 80 to 90 mass% of vinylidene chloride and from 10 to 20 mass% of vinyl chloride. The copolymer includes, for example, from 60 to 98 mass% of constituent units derived from vinylidene chloride and from 2 to 40 mass% of constituent units derived from vinyl chloride, and from the perspective of more easily achieving a good balance between the extrusion processability at the time of film formation and gas barrier properties of the resulting film, the copolymer preferably includes from 70 to 95 mass% of constituent units derived from vinylidene chloride and from 5 to 30 mass% of constituent units derived from vinyl chloride, and more preferably from 80 to 90 mass% of constituent units derived from vinylidene chloride and from 10 to 20 mass% of constituent units derived from vinyl chloride.

In the copolymer, the molar ratio of diad sites in which one constituent unit derived from vinylidene chloride and one constituent unit derived from vinyl chloride are linked is not less than 25.3 mol% and not greater than 26.5 mol%, preferably not less than 25.6 mol% and not greater than 26.2 mol%, and more preferably not less than 25.9 mol% and not greater than 26.1 mol% relative to all constituent units. When the molar ratio is within the range described above, the adhesion of the resulting film is easily enhanced. Note that in this specification, the molar ratio of diad sites refers to a value calculated based on the results of NMR measurements performed on the film described above, as described in detail in the examples.

In the copolymer, the molar ratio of diad sites in which two constituent units derived from vinyl chloride are linked is not less than 2.5 mol% and not greater than 3.5 mol%, preferably not less than 2.5 mol% and not greater than 3.0 mol%, and more preferably not less than 2.6 mol% and not greater than 2.9 mol% relative to all constituent units. When the molar ratio is within the range described above, the adhesion of the resulting film is easily enhanced further.

In the copolymer, the proportion of molecular chains with a molecular weight of not greater than 20,000 is preferably not less than 7.9 mass% and not greater than 10.0 mass%, more preferably not less than 7.9 mass% and not greater than 9.8 mass%, and even more preferably not less than 8.0 mass% and not greater than 9.7 mass%. When the proportion is within the range described above, the adhesion of the resulting film is easily enhanced further. Note that in this specification, the molecular weight refers to the molecular weight in terms of polystyrene measured by gel permeation chromatography.

Additives

The vinylidene chloride-based resin film may further contain various additives. Organic substances (or polymers) and inorganic substances may both be used as additives. Examples of additives include plasticizers, stabilizers, surfactants, and lubricants. Additives may be used alone, or two or more types may be used in combination.

Plasticizers

Examples of plasticizers include dioctyl phthalate, acetyl tributyl citrate, dibutyl sebacate, dioctyl sebacate, acetylated monoglycerides (for example, diacetyl monolauryl glyceride), acetylated diglycerides, and acetylated triglycerides. Plasticizers may be used alone, or two or more types may be used in combination.

Stabilizers

Examples of stabilizers include epoxidized oils such as epoxidized soybean oil and epoxidized linseed oil; amide derivatives such as alkyl esters, and other stabilizers such as magnesium hydroxide and tetrasodium pyrophosphate. Stabilizers may be used alone, or two or more types may be used in combination.

Surfactants

Examples of surfactants include nonionic surfactants such as glycerin fatty acid esters, polyglycerin fatty acid esters, sorbitan fatty acid esters, and polyoxyethylene sorbitan fatty acid esters. Surfactants may be used alone, or two or more types may be used in combination.

Lubricants

Examples of lubricants include inorganic lubricants such as silicon dioxide, zeolite, and calcium carbonate; and organic lubricants such as saturated fatty acid amides, unsaturated fatty acid amides, substituted amides, and thioether-based compounds. Lubricants may be used alone, or two or more types may be used in combination.
Examples of saturated fatty acids include butyl amides, valeric acid amides, caproic acid amides, caprylic acid amides, capric acid amides, lauric acid amides, myristic acid amides, palmitic acid amides, stearic acid amides, arachidic acid amides, and benehic acid amides. Examples of unsaturated fatty acid amides include oleic acid amides and erucic acid amides. Examples of substituted amides include N-oleyl palmitic acid amides, N-stearyl stearic acid amides, N-stearyl oleic acid amides, N-oleyl stearic acid amides, and N-stearyl erucic acid amides. Examples of thioether-based compounds include dilauryl thiodipropionate, ditridecyl thiodipropionate, dimyristyl thiodipropionate, distearyl thiodipropionate, pentaerithritol tetrakis(3-lauryl thiodipropionate), pentaerithritol tetrakis(3-dodecyl thiodipropionate), pentaerithritol tetrakis(3-octadecyl thiodipropionate), pentaerithritol tetrakis(3-myristyl thiodipropionate), and pentaerithritol tetrakis(3-stearyl thiodipropionate).
When the additive is a liquid additive such as a plasticizer, the content of the additive is preferably in the range of from 0.05 to 15 parts by mass, more preferably in the range of from 0.5 to 10 parts by mass, and even more preferably within the range of from 1.0 to 9.0 parts by mass per 100 parts by mass of the vinylidene chloride-vinyl chloride copolymer. In particular, when the upper range of the compounding ratio of a liquid additive is within the range described above, stickiness due to bleed-out can be effectively suppressed. In addition, when the additive is a powder additive such as a surfactant or a lubricant, the content of the additive is preferably in the range of from 0.1 to 15 parts by mass, more preferably in the range of from 0.5 to 10 parts by mass, and even more preferably within the range of from 1.0 to 9.0 parts by mass per 100 parts by mass of the vinylidene chloride-vinyl chloride copolymer.

Production method for vinylidene chloride-based resin film

The production method for a vinylidene chloride-based resin film according to the present invention includes a polymerization step of obtaining a vinylidene chloride-vinyl chloride copolymer by copolymerizing vinylidene chloride and vinyl chloride, and a molding step of molding the copolymer.
Examples of polymerization methods in the polymerization step include suspension polymerization and emulsion polymerization, which are non-uniform polymerization methods, and suspension polymerization is preferable from the perspectives of workability, productivity, resource conservation, and the purity of the vinylidene chloride-vinyl chloride copolymer. In the polymerization step, polymerization is initiated at a polymerization initial temperature of not lower than 40°C and not higher than 46°C;
polymerization is performed while heating under heating conditions expressed by the following formula (1):

$$T = at^2 + bt \quad (1)$$

(wherein t represents time (units: hours), T represents a difference between a polymerization temperature and the polymerization initial temperature, that is, the heating range (units: °C), a represents a number not smaller than 0.0150 and not greater than 0.0300, and b represents a number not smaller than 0.1200 and not greater than 0.2500); and polymerization is then performed at a polymerization late-stage temperature of not lower than 57°C and not higher than 65°C. The polymerization initial temperature is preferably not lower than 41°C and not higher than 46°C and more preferably not lower than 43°C and not higher than 45°C. Symbol a in formula (1) is preferably a number not smaller than 0.019 and not greater than 0.0285 and more preferably a number not smaller than 0.0216 and not greater than 0.0274. Symbol b in formula (1) is preferably a number not smaller than 0.1500 and not greater than 0.2350 and more preferably a number not smaller than 0.1764 and not greater than 0.2234. The polymerization late-stage temperature is preferably not lower than 59°C and not higher than 64°C, more preferably not lower than 61°C and not higher than 63°C, and particularly preferably 62°C. When the polymerization initial temperature, a and b in formula (1), and the polymerization late-stage temperature are within the ranges described above, the adhesion of the resulting film is easily enhanced.

Examples of molding methods in the molding step include melt extrusion, solution casting, and a calendar method, and melt extrusion is preferable from the perspectives of workability, productivity, resource conservation, and the properties of the resin film. Examples of melt extrusion methods include a T-die method and an inflation method, but an inflation method is preferable. In an inflation method, the required equipment itself is simple, and a wide film can be produced from a small mold.

Wrap film

The wrap film according to the present invention is made of the resin film according to the present invention. Like the resin film, the wrap film also has excellent adhesion.

Examples

The present invention will be described in further detail hereinafter using examples, but the present invention is not limited to these examples.

Example 1

A mixture was used which contains vinylidene chloride and vinyl chloride at a mass ratio of 82:18 as monomers to be polymerized. As additives, a total of 8.3 parts by mass including 2.5 parts by mass of acetyl tributyl citrate (ATBC), 3.0 parts by mass of diacetyl monolauryl glyceride, and 2.8 parts by mass of epoxidized soybean oil (ESBO) were added and mixed into 100 parts by mass of this mixture. Polymerization was initiated at a polymerization initial temperature of 45°C, and polymerization was then performed while heating under heating conditions expressed by the following formula (1a) in terms of time (t: hours) and the temperature increase range (T: °C):

$$T = 0.0274t^2 + 0.2234t \quad (1a).$$

Next, suspension polymerization was performed for 6 hours at a constant polymerization later-stage temperature of 62°C to obtain a vinylidene chloride-vinyl chloride copolymer. The total polymerization time was 27 hours. Next, the copolymer described above was supplied to a φ40 single-screw extruder, and after the copolymer was melt-extruded into a ring shape at a resin temperature of approximately 170°C and then cooled in a cooling tank with a temperature of 10°C, the copolymer was heated in a heating bath with a temperature of 25°C. Biaxial stretching was performed by inflation to 4.0 times in the MD and 4.8 times in the TD at 28°C, and the tension was alleviated by 7% in the MD direction to produce a wrap film with a thickness of 15 μm.

Example 2

A mixture was used which contains vinylidene chloride and vinyl chloride at a mass ratio of 82:18 as monomers to be polymerized. As additives, a total of 8.3 parts by mass including 2.5 parts by mass of acetyl tributyl citrate (ATBC), 3.0 parts by mass of diacetyl monolauryl glyceride, and 2.8 parts by mass of epoxidized soybean oil (ESBO) were added and mixed into 100 parts by mass of this mixture. Polymerization was initiated at a polymerization initial temperature of 45°C, and polymerization was then performed while heating under heating conditions expressed by the following formula (1b) in terms of time (t: hours) and the temperature increase range (T: °C):

$$T=0.0216t^2+0.1764t \ (1b).$$

Next, suspension polymerization was performed for 3 hours at a constant polymerization later-stage temperature of 62°C to obtain a vinylidene chloride-vinyl chloride copolymer. The total polymerization time was 27 hours. Next, the copolymer described above was supplied to a $\varphi$40 single-screw extruder, and after the copolymer was melt-extruded into a ring shape at a resin temperature of approximately 170°C and then cooled in a cooling tank with a temperature of 10°C, the copolymer was heated in a heating bath with a temperature of 25°C. Biaxial stretching was performed by inflation to 4.0 times in the MD and 4.7 times in the TD at 28°C, and the tension was alleviated by 7% in the MD direction to produce a wrap film with a thickness of 15 $\mu$m.

Example 3

A mixture was used which contains vinylidene chloride and vinyl chloride at a mass ratio of 82:18 as monomers to be polymerized. As additives, a total of 8.3 parts by mass including 2.5 parts by mass of acetyl tributyl citrate (ATBC), 3.0 parts by mass of diacetyl monolauryl glyceride, and 2.8 parts by mass of epoxidized soybean oil (ESBO) were added and mixed into 100 parts by mass of this mixture. Polymerization was initiated at a polymerization initial temperature of 43°C, and polymerization was then performed while heating under heating conditions expressed by the following formula (1c) in terms of time (t: hours) and the temperature increase range (T: °C):

$$T=0.0274t^2+0.0.2234t \ (1c).$$

Next, suspension polymerization was performed for 3 hours at a constant polymerization later-stage temperature of 62°C to obtain a vinylidene chloride-vinyl chloride copolymer. The total polymerization time was 27 hours. Next, the copolymer described above was supplied to a $\varphi$40 single-screw extruder, and after the copolymer was melt-extruded into a ring shape at a resin temperature of approximately 170°C and then cooled in a cooling tank with a temperature of 10°C, the copolymer was heated in a heating bath with a temperature of 25°C. Biaxial stretching was performed by inflation to 4.0 times in the MD and 4.8 times in the TD at 28°C, and the tension was alleviated by 7% in the MD direction to produce a wrap film with a thickness of 15 $\mu$m.

Comparative Example 1

A mixture was used which contains vinylidene chloride and vinyl chloride at a mass ratio of 82:18 as monomers to be polymerized. As additives, a total of 8.3 parts by mass including 2.5 parts by mass of acetyl tributyl citrate (ATBC), 3.0 parts by mass of diacetyl monolauryl glyceride, and 2.8 parts by mass of epoxidized soybean oil (ESBO) were added and mixed into 100 parts by mass of this mixture. Polymerization was initiated at a polymerization initial temperature of 47°C, and polymerization was then performed while heating under heating conditions expressed by the following formula (2) in terms of time (t: hours) and the temperature increase range (T: °C):

$$T=0.0144t^2+0.1176t \ (2).$$

Next, suspension polymerization was performed for 2 hours at a constant polymerization later-stage temperature of 56.5°C to obtain a vinylidene chloride-vinyl chloride copolymer. The total polymerization time was 27 hours. Next, the copolymer described above was supplied to a $\varphi$40 single-screw extruder, and after the copolymer was melt-extruded into a ring shape at a resin temperature of approximately 170°C and then cooled in a cooling tank with a temperature of 10°C, the copolymer was heated in a heating bath with a temperature of 25°C. Biaxial stretching was performed by inflation to 4.0 times in the MD and 4.5 times in the TD at 28°C, and the tension was alleviated by 7% in the MD direction to produce a wrap film with a thickness of 15 $\mu$m.

Diad site ratio measurement

The proportion of diad sites in which one constituent unit derived from vinylidene chloride and one constituent unit derived from vinyl chloride are linked were calculated as the molar ratio based on the results of measurements by NMR for the films that were produced.

First, 1 g of the film was collected, and 50 ml of THF was added and dissolved at 50°C. Next, 300 mL of methanol was added gradually and reprecipitated. The reprecipitated product was filtered and dried to purify the reprecipitated product. Next, 35 mg of the purified reprecipitated product was collected and placed in a test tube, and 0.75 ml of deuterated THF was added as a measurement solvent and dissolved uniformly. Next, 0.35 ml of the solution was collected, and NMR measurements were performed with a high-resolution proton nuclear magnetic resonance device ("FT-NMR JNM-EX270" manufactured by JEOL RESONANCE). Measurements were performed under conditions with an interval time of 5 sec and a cumulative number of 128 times, and a spectrum was obtained with the horizontal axis representing the chemical shift based on a signal of tetramethyl silane.

Signals 1, 2, and 3 obtained in the spectrum were assigned as follows, with a constituent unit derived from vinylidene chloride ($-CH_2-CCl_2-$) being expressed as A and a constituent unit derived from vinyl chloride ($-CH_2-CHCl-$) being expressed as B.

- Signal 1 (approximately 5.2 to 4.5 ppm) was assigned to a CH signal (methine (CH) group of a constituent unit derived from vinyl chloride) of B.
- Signal 2 (approximately 4.2 to 3.8 ppm) was assigned to a $CH_2$ signal (methylene ($CH_2$) group of a constituent unit derived from vinylidene chloride) of A on one side of AA.
- Signal 3 (approximately 3.5 to 2.8 ppm) was assigned to a $CH_2$ signal (methylene ($CH_2$) group of a constituent unit derived from vinylidene chloride) of A in both AB and BA.

The molar ratios of the constituent units or the diad sites were determined from the spectrum area values of these signals (areas of signals in NMR spectrum). Note that each molar ratio is expressed as follows.

- Molar ratio of A (mol%): P(A)
- Molar ratio of B (mol%): P(B)
- Molar ratio of AA (diad sites in which two constituent units derived from vinylidene chloride are linked) (mol%): P(AA)
- Molar ratio of AB (diad sites in which one constituent unit derived from vinylidene chloride and one constituent unit derived from vinyl chloride are linked) (mol%): P(AB)
- Molar ratio of BB (diad sites in which two constituent units derived from vinyl chloride are linked) (mol%): P(BB)

The integrated values of the signals in the spectrum were assigned as follows from the area values (areas of peaks in the NMR spectrum) of the signals 1, 2, and 3 assigned as described above.

- The integrated value of signal 1 (approximately 5.2 to 4.5 ppm) was one $^1$H unit of B.
- The integrated value of signal 2 (approximately 4.2 to 3.8 ppm) was two $^1$H units of A.
- The integrated value of signal 3 (approximately 3.5 to 2.8 ppm) was four $^1$H units of A.

Each molar ratio was calculated using the formula that holds from among the following formulas.

- P(A)+P(B)=100
- P(AA)+P(BB)+P(AB)+P(BA)=100
- P(AB)=P(BA)
- P(A)=P(AA)+P(AB)
- P(B)=P(BB)+P(BA)

P(A) and P(B) are determined from the following formula (Equation 3).

Equation 3

P(B):P(A) = integrated value of signal 1:(integrated value of signal 2 + integrated value of signal 3 / 2)/2

P(A)=100-P(B)

P(AA) and P(BB) are determined from Equations 4 and 5.

Equation 4

P(AA):P(AB) = integrated value of signal 2:integrated value of signal 3 / 2

P(AB)=P(A)-P(AA)

Equation 5

P(BB)=100-P(AA)-P(AB)-P(BA)

Molecular weight measurement

First, 5 g of the film was added to 300 ml of tetrahydrofuran and dissolved at 50°C, and a polymer was separated with methanol, filtered, and dried. Next, 7.5 mg of this dried polymer was added to 10 ml, dissolved at 50°C, cooled to room temperature, and then filtered with a 0.20 $\mu$m filter. The filtrate was injected into a liquid chromatogram, and the molecular weight was measured. A Shodex GPC-104 manufactured by Showa Denko K.K. was used as a measurement device, and an LF-404 manufactured by Showa Denko K.K. was used as a column. The molecular weight of the copolymer was calculated using monodisperse polystyrene, which has a known molecular weight, as a standard substance. The proportion of molecular chains having a molecular weight of not greater than 20,000 was calculated from the resulting molecular weight distribution.

Measurement of surface peel strength

This method evaluated the adhesive strength between wrap films when containers such as tableware or food products were covered with wrap films. The surface peel strength was measured as follows. Two cylinders with a base area of 25 cm$^2$ and a mass of 300 g were prepared. Wrap films were fixed to the bases of these two cylinders while being pulled so that no wrinkles were formed. One cylinder was then placed on top of the other cylinder so that the wrap film surfaces perfectly overlapped with one another, and they were then press bonded for one minute. After a prescribed amount of time passed, the wrap films that were still fixed to the overlapping cylinders were pulled away from one another in a direction perpendicular to the surface at a speed of 100 mm/min with a Tensilon RTC-1210A tension/compression tester manufactured by Orientec Co., Ltd. Measurements were performed in an atmosphere at 23°C and 50% RH. Tests were performed five times, and the average values thereof were used as the measurement results. The results are shown in Table 1.

[Table 1]

|  | Example 1 | Example 2 | Example 3 | Comparative Example 1 |
|---|---|---|---|---|
| Molar ratio of diad sites in which one constituent unit derived from vinylidene chloride and one constituent unit derived from vinyl chloride are linked (mol%) | 26.0 | 26.1 | 25.9 | 25.2 |

(continued)

|  | Example 1 | Example 2 | Example 3 | Comparative Example 1 |
|---|---|---|---|---|
| Molar ratio of diad sites in which two constituent units derived from vinyl chloride are linked (mol%) | 2.6 | 2.9 | 2.8 | 2.4 |
| Proportion of molecular chains having a molecular weight of not greater than 20,000 (mass%) | 8.0 | 9.7 | 8.3 | 7.8 |
| Surface peel strength (Relative value using the measurement of Comparative Example 1 as "1.0") | 2.0 | 2.0 | 1.4 | 1.0 |

**Claims**

1. A vinylidene chloride-based resin film containing a vinylidene chloride-vinyl chloride copolymer, wherein a molar ratio of diad sites in which one constituent unit derived from vinylidene chloride and one constituent unit derived from vinyl chloride are linked is not less than 25.3 mol% and not greater than 26.5 mol% relative to all constituent units in the copolymer.

2. The resin film according to claim 1, wherein a molar ratio of diad sites in which two constituent units derived from vinyl chloride are linked is not less than 2.5 mol% and not greater than 3.5 mol% relative to all constituent units in the copolymer.

3. The resin film according to claim 1 or 2, wherein a proportion of molecular chains having a molecular weight of not greater than 20,000 is not less than 7.9 mass% and not greater than 10.0 mass% in the copolymer.

4. A wrap film comprising the resin film according to any one of claims 1 to 3.

5. A production method for a vinylidene chloride-based resin film, the method comprising: a polymerization step of obtaining a vinylidene chloride-vinyl chloride copolymer by polymerizing vinylidene chloride and vinyl chloride; and a molding step of molding the copolymer, wherein in the polymerizing step, polymerization is initiated at a polymerization initial temperature of not lower than 40°C and not higher than 46°C; polymerization is performed while heating under heating conditions expressed by the following formula (1):

$$T=at^2+bt \ (1)$$

(wherein t represents time (units: hours), T represents a difference between a polymerization temperature and the polymerization initial temperature (units: °C), a represents a number not smaller than 0.0150 and not greater than 0.0300, and b represents a number not smaller than 0.1200 and not greater than 0.2500); and polymerization is then performed at a polymerization late-stage temperature of not lower than 57°C and not higher than 65°C.

FIG. 1

## INTERNATIONAL SEARCH REPORT

International application No.

PCT/JP2017/024707

| A. CLASSIFICATION OF SUBJECT MATTER |
|---|
| $C08F214/08$ (2006.01)i, $B65D65/02$ (2006.01)i, $C08J5/18$ (2006.01)i |

According to International Patent Classification (IPC) or to both national classification and IPC

| B. FIELDS SEARCHED |
|---|
| Minimum documentation searched (classification system followed by classification symbols) |
| C08C19/00-19/44, C08F6/00-246/00, C08F301/00, C08F2/00-2/60 |

| Documentation searched other than minimum documentation to the extent that such documents are included in the fields searched |
|---|
| Jitsuyo Shinan Koho              1922-1996   Jitsuyo Shinan Toroku Koho   1996-2017<br>Kokai Jitsuyo Shinan Koho    1971-2017   Toroku Jitsuyo Shinan Koho   1994-2017 |

| Electronic data base consulted during the international search (name of data base and, where practicable, search terms used) |
|---|
|  |

### C. DOCUMENTS CONSIDERED TO BE RELEVANT

| Category* | Citation of document, with indication, where appropriate, of the relevant passages | Relevant to claim No. |
|---|---|---|
| A | WO 2014/054413 A1  (Kureha Corp.),<br>10 April 2014 (10.04.2014),<br>entire text<br>& EP 2905310 A1<br>entire text | 1-5 |
| A | JP 06-025313 A  (Sumitomo Chemical Co., Ltd.,<br>Kureha Chemical Industry Co., Ltd., Sun Arrow<br>Kasei Co., Ltd., Nippon Zeon Co., Ltd.),<br>01 February 1994 (01.02.1994),<br>entire text<br>(Family: none) | 1-5 |

☒ Further documents are listed in the continuation of Box C.    ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 August 2017 (22.08.17) | 12 September 2017 (12.09.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2017/024707 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-531603 A  (Solvay),<br>24 September 2002 (24.09.2002),<br>entire text<br>& EP 1141052 A1<br>entire text<br>& WO 2000/032659 A1 | 1-5 |
| A | JP 2002-531604 A  (Solvay),<br>24 September 2002 (24.09.2002),<br>entire text<br>& EP 1141053 A1<br>entire text<br>& WO 2000/032660 A1 | 1-5 |
| A | JP 40-015828 B1  (Kureha Chemical Industry Co.,<br>Ltd.),<br>22 July 1965 (22.07.1965),<br>entire text<br>(Family: none) | 1-5 |
| A | JP 43-014227 B1  (Kureha Chemical Industry Co.,<br>Ltd.),<br>15 June 1968 (15.06.1968),<br>entire text<br>(Family: none) | 1-5 |
| A | JP 60-163906 A  (Toyo Soda Manufacturing Co.,<br>Ltd.),<br>26 August 1985 (26.08.1985),<br>entire text<br>(Family: none) | 1-5 |
| A | EP 2746303 A1  (LG CHEM, LTD.),<br>25 June 2014 (25.06.2014),<br>entire text<br>& US 2014/0235762 A1<br>entire text<br>& WO 2013/183895 A1 | 1-5 |

Form PCT/ISA/210 (continuation of second sheet) (January 2015)

**EP 3 498 741 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10324809 A
- JP 11199736 A
- JP 11012422 A